# EUROPEAN PATENT APPLICATION

(11) **EP 4 224 946 A1**
(43) Date of publication of application: **09.08.2023**
(21) Application number: 21876040.3
(22) Date of filing: 29.09.2021
(51) Int. Cl.: H04W 52/02, H04W 72/04, H04W 28/18, H04W 76/28, H04W 4/40, H04W 92/18

(54) **METHOD AND APPARATUS FOR SL DRX OPERATION USING DEFAULT SL DRX CONFIGURATION IN NR V2X**

(30) Priority: 29.09.2020 KR 20200127033; 14.10.2020 KR 20200132701; 31.12.2020 KR 20200189617
(71) Applicant: LG Electronics Inc., Yeongdeungpo-gu Seoul, 07336 (KR)
(72) Inventor: PARK, Giwon, Seoul 06772 (KR); BACK, Seoyoung, Seoul 06772 (KR); LEE, Seungmin, Seoul 06772 (KR); HONG, Jongwoo, Seoul 06772 (KR)
(74) Representative: Plasseraud IP
(86) International application number: PCT/KR2021/013367
(87) International publication number: WO 2022/071765

(57) **Abstract**

Proposed is a method for operation of a first apparatus (100) in a wireless communication system. The method may comprise the steps of: receiving, from a second apparatus (200) via a physical sidelink control channel (PSCCH), first sidelink control information (SCI) for scheduling of a physical sidelink shared channel (PSSCH), within an active time on the basis of first SL DRX configuration including information related to an SL DRX cycle and information related to an on-duration timer; and receiving second SCI or SL data from the second apparatus (200) via the PSSCH.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

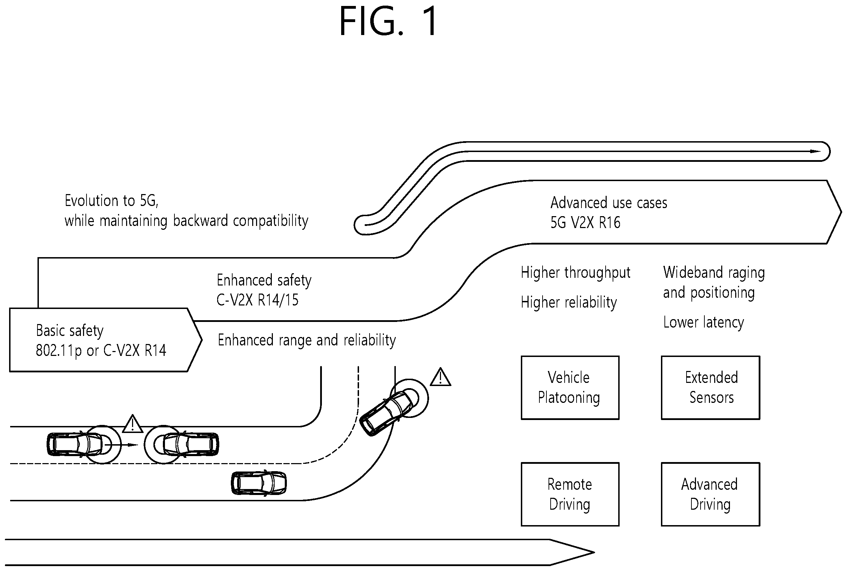

FIG. 1 is a drawing for describing V2X communication based on NR, compared to V2X communication based on RAT used before NR. The embodiment of FIG. 1 may be combined with various embodiments of the present disclosure.

Regarding V2X communication, a scheme of providing a safety service, based on a V2X message such as Basic Safety Message (BSM), Cooperative Awareness Message (CAM), and Decentralized Environmental Notification Message (DENM) is focused in the discussion on the RAT used before the NR. The V2X message may include position information, dynamic information, attribute information, or the like. For example, a UE may transmit a periodic message type CAM and/or an event triggered message type DENM to another UE.

Thereafter, regarding V2X communication, various V2X scenarios are proposed in NR. For example, the various V2X scenarios may include vehicle platooning, advanced driving, extended sensors, remote driving, or the like.

### DISCLOSURE

### TECHNICAL SOLUTION

According to an embodiment, an operation method of a first device 100 in wireless communication system is proposed. The method may comprise: receiving, from a second device 200, first sidelink control information, SCI, for scheduling of a physical sidelink shared channel, PSSCH, through a physical sidelink control channel, PSCCH, within an active time, based on the first SL DRX configuration including information related to an SL DRX cycle and information related to an on-duration timer; and receiving, from the second device 200, second SCI or SL data, through the PSSCH.

### ADVANTAGEOUS EFFECTS

The user equipment (UE) can efficiently perform SL communication.

### BRIEF DESCRIPTION OF THE DRAWINGS

FIG. 1 is a drawing for describing V2X communication based on NR, compared to V2X communication based on RAT used before NR.
FIG. 2 shows a structure of an NR system, based on an embodiment of the present disclosure.
FIG. 3 shows a radio protocol architecture, based on an embodiment of the present disclosure.
FIG. 4 shows a structure of a radio frame of an NR, based on an embodiment of the present disclosure.
FIG. 5 shows a structure of a slot of an NR frame, based on an embodiment of the present disclosure.
FIG. 6 shows an example of a BWP, based on an embodiment of the present disclosure.
FIG. 7 shows a UE performing V2X or SL communication, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an example of a DRX cycle according to an embodiment of the present disclosure.
FIG. 11 shows a procedure for a UE to perform an SL DRX operation based on default/common SL DRX configuration according to an embodiment of the present disclosure.
FIG. 12 shows an example in which start offset and slot offset among parameters of SL DRX configuration are applied according to an embodiment of the present disclosure.
FIG. 13 shows a procedure for performing SL communication by a receiving UE performing an SL DRX operation according to an embodiment of the present disclosure.
FIG. 14 shows a procedure for performing wireless communication by a first device according to an embodiment of the present disclosure.
FIG. 15 shows a procedure for a second device to perform wireless communication according to an embodiment of the present disclosure.
FIG. 16 shows a communication system 1, based on an embodiment of the present disclosure.
FIG. 17 shows wireless devices, based on an embodiment of the present disclosure.
FIG. 18 shows a signal process circuit for a transmission signal, based on an embodiment of the present disclosure.
FIG. 19 shows another example of a wireless device, based on an embodiment of the present disclosure.
FIG. 20 shows a hand-held device, based on an embodiment of the present disclosure.
FIG. 21 shows a vehicle or an autonomous vehicle, based on an embodiment of the present disclosure.

### MODE FOR INVENTION

In the present specification, "A or B" may mean "only A", "only B" or "both A and B." In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

A technical feature described individually in one figure in the present specification may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

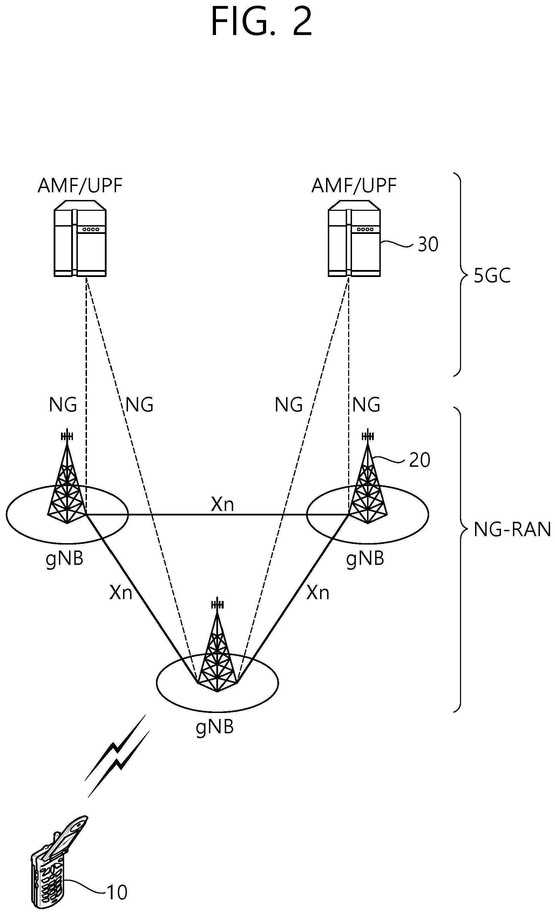

FIG. 2 shows a structure of an NR system, based on an embodiment of the present disclosure. The embodiment of FIG. 2 may be combined with various embodiments of the present disclosure.

Referring to FIG. 2, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 2 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

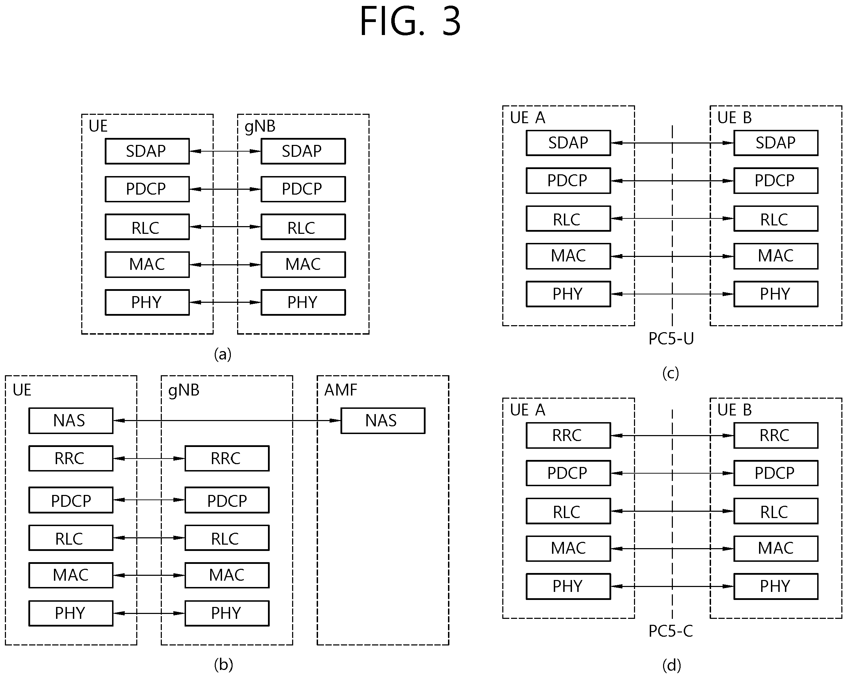

FIG. 3 shows a radio protocol architecture, based on an embodiment of the present disclosure. The embodiment of FIG. 3 may be combined with various embodiments of the present disclosure. Specifically, (a) of FIG. 3 shows a radio protocol stack of a user plane for Uu communication, and (b) of FIG. 3 shows a radio protocol stack of a control plane for Uu communication, (c) of FIG. 3 shows a radio protocol stack of a user plane for SL communication, and (d) of FIG. 3 shows a radio protocol stack of a control plane for SL communication.

Referring to FIG. 3, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_{_}IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

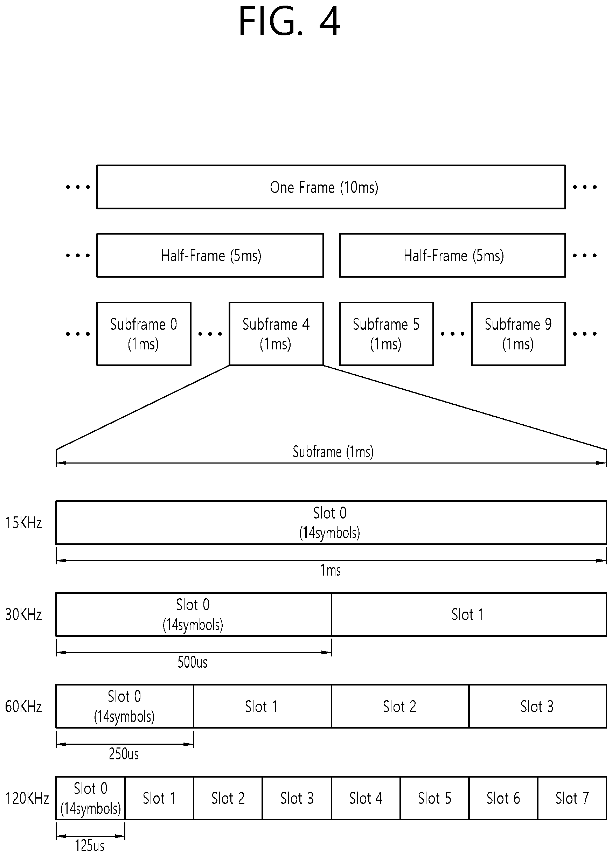

FIG. 4 shows a structure of a radio frame of an NR, based on an embodiment of the present disclosure. The embodiment of FIG. 4 may be combined with various embodiments of the present disclosure.

Referring to FIG. 4, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60 120 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

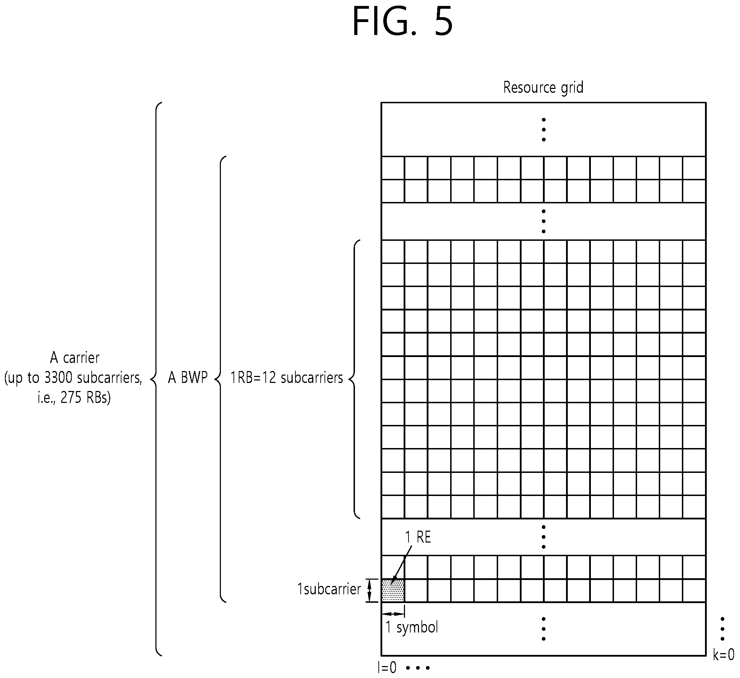

FIG. 5 shows a structure of a slot of an NR frame, based on an embodiment of the present disclosure. The embodiment of FIG. 5 may be combined with various embodiments of the present disclosure.

Referring to FIG. 5, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

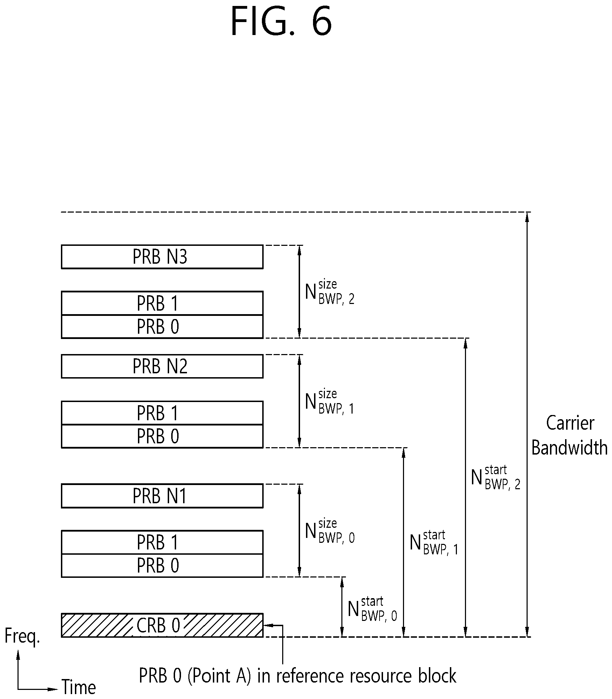

FIG. 6 shows an example of a BWP, based on an embodiment of the present disclosure. The embodiment of FIG. 6 may be combined with various embodiments of the present disclosure. It is assumed in the embodiment of FIG. 6 that the number of BWPs is 3.

Referring to FIG. 6, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP.} For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

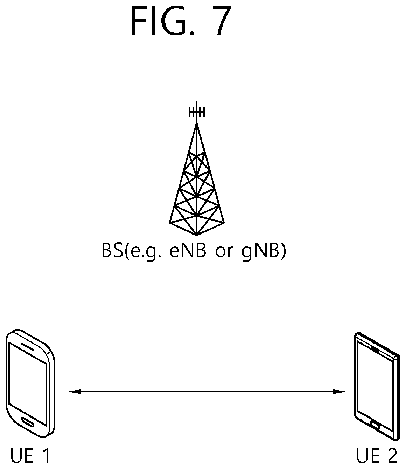

FIG. 7 shows a UE performing V2X or SL communication, based on an embodiment of the present disclosure. The embodiment of FIG. 7 may be combined with various embodiments of the present disclosure.

Referring to FIG. 7, in V2X or SL communication, the term 'UE' may generally imply a UE of a user. However, if a network equipment such as a BS transmits/receives a signal according to a communication scheme between UEs, the BS may also be regarded as a sort of the UE. For example, a UE 1 may be a first apparatus 100, and a UE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the UE 1 is capable of transmitting a signal may be configured to the UE 2 which is a receiving UE, and the signal of the UE 1 may be detected in the resource pool.

Herein, if the UE 1 is within a connectivity range of the BS, the BS may inform the UE 1 of the resource pool. Otherwise, if the UE 1 is out of the connectivity range of the BS, another UE may inform the UE 1 of the resource pool, or the UE 1 may use a pre-configured resource pool.

In general, the resource pool may be configured in unit of a plurality of resources, and each UE may select a unit of one or a plurality of resources to use it in SL signal transmission thereof.

Hereinafter, resource allocation in SL will be described.

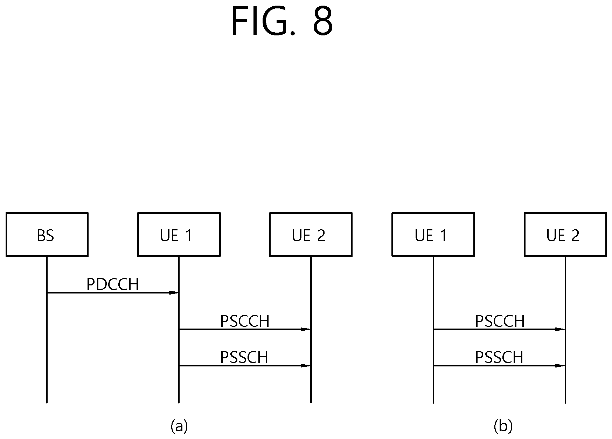

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a BS may schedule an SL resource to be used by the UE for SL transmission. For example, the BS may perform resource scheduling to a UE 1 through a PDCCH (e.g., downlink control information (DCI)) or RRC signaling (e.g., Configured Grant Type 1 or Configured Grant Type 2), and the UE 1 may perform V2X or SL communication with respect to a UE 2 according to the resource scheduling. For example, the UE 1 may transmit a sidelink control information (SCI) to the UE 2 through a physical sidelink control channel (PSCCH), and thereafter transmit data based on the SCI to the UE 2 through a physical sidelink shared channel (PSSCH).

Referring to (b) of FIG. 8, in the LTE transmission mode 2, the LTE transmission mode 4, or the NR resource allocation mode 2, the UE may determine an SL transmission resource within an SL resource configured by a BS/network or a pre-configured SL resource. For example, the configured SL resource or the pre-configured SL resource may be a resource pool. For example, the UE may autonomously select or schedule a resource for SL transmission. For example, the UE may perform SL communication by autonomously selecting a resource within a configured resource pool. For example, the UE may autonomously select a resource within a selective window by performing a sensing and resource (re)selection procedure. For example, the sensing may be performed in unit of subchannels. In addition, the UE 1 which has autonomously selected the resource within the resource pool may transmit the SCI to the UE 2 through a PSCCH, and thereafter may transmit data based on the SCI to the UE 2 through a PSSCH.

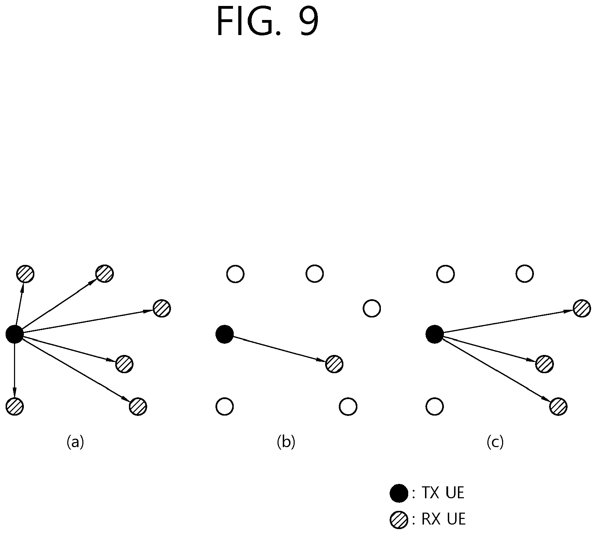

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, power saving will be described.

As a power saving technique of at UE, UE adaptation to traffic and power consumption characteristics, adaptation according to frequency/time change, adaptation to antenna, adaptation to discontinuous reception (DRX) configuration, adaptation to UE processing capability, adaptation for reduction of PDCCH monitoring/decoding, power saving signal/channel/procedure for triggering adaptation to UE power consumption, power consumption reduction in RRM measurement, etc. may be considered.

Hereinafter, discontinuous reception (DRX), which is one of techniques capable of realizing UE power saving, will be described.

The procedure of a DRX-related UE can be summarized as shown in Table 5 below.

**[Table 5]**

| | Type of signals | UE procedure |
|---|---|---|
| Step 1 | RRC signaling (MAC-CellGroupConfig) | - receive DRX configuration information |
| Step 2 | MAC CE((Long) DRX command MAC CE) | - receive DRX command |
| Step 3 | | - monitor PDCCH during on-duration of DRX period |

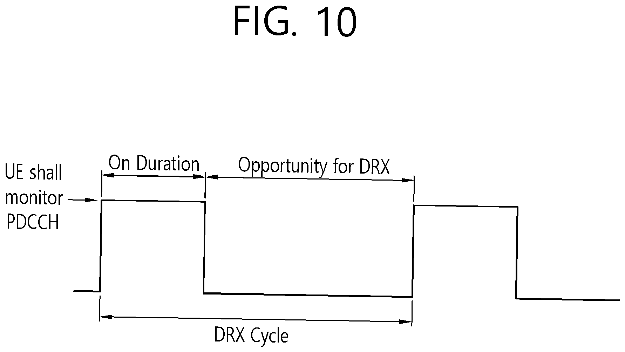

FIG. 10 shows an example of a DRX cycle according to an embodiment of the present disclosure. The embodiment of FIG. 10 may be combined with various embodiments of the present disclosure.

Referring to FIG. 10, a UE uses DRX in RRC_IDLE state and RRC INACTIVE state to reduce power consumption. When DRX is configured, a UE performs DRX operation according to DRX configuration information. A UE operating as DRX repeatedly turns on and off the reception task.

For example, when DRX is configured, a UE attempts to receive a downlink channel PDCCH only within a pre-configured time interval, and does not attempt to receive the PDCCH within the remaining time interval. The time period during which a UE should attempt to receive a PDCCH is called on-duration, and the on-duration period is defined once per DRX cycle.

A UE may receive DRX configuration information from a gNB through RRC signaling, and may operate as DRX through reception of a (long) DRX command MAC CE.

DRX configuration information may be included in *MAC-CellGroupConfig.* The IE, *MAC-CellGroupConfig*, may be used to configure MAC parameters for a cell group, including DRX.

A DRX command MAC CE or long DRX command MAC CE is identified by a MAC PDU subheader with a logical channel ID (LCID). It has a fixed size of 0 bits.

Table 6 below shows a value of LCID for DL-SCH.

**[Table 6]**

| Index | LCID values |
|---|---|
| 111011 | Long DRX Command |
| 111100 | DRX Command |

The PDCCH monitoring operation of a UE is controlled by DRX and Bandwidth Adaptation (BA). On the other hand, when DRX is configured, a UE does not need to continuously monitor a PDCCH. On the other hand, DRX has the following characteristics.
- on-duration: This is a period in which a UE waits to receive the next PDCCH after waking up. If a UE successfully decodes a PDCCH, the UE maintains the awake state and starts an inactivity-timer.
- an inactive timer: This is a time interval in which a UE waits for successful PDCCH decoding from the last successful PDCCH decoding, and it is a period in which the UE sleeps again in case of failure. A UE must restart an inactivity timer after a single successful decoding of a PDCCH for the only first transmission (i.e., not for retransmission).
- a retransmission timer: A time interval during which a retransmission is expected.
- a cycle: It defines the periodic repetition of on-duration and subsequent possible periods of inactivity.

Hereinafter, DRX in a MAC layer will be described. Hereinafter, a MAC entity may be expressed as a UE or a MAC entity of a UE.

A MAC entity may be configured by RRC with DRX function for controlling a PDCCH monitoring activity of a UE for a radio network temporary identifier (C-RNTI), CS-RNTI, TPC-PUCCH-RNTI, TPC-PUSCH-RNTI, and TPC-SRS-RNTI of the MAC entity. When using DRX operation, a MAC entity must monitor a PDCCH. In the RRC_CONNECTED state, if DRX is configured, a MAC entity may monitor a PDCCH discontinuously using a DRX operation. Otherwise, a MAC entity must continuously monitor a PDCCH.

RRC controls DRX operation by configuring parameters of DRX configuration information.

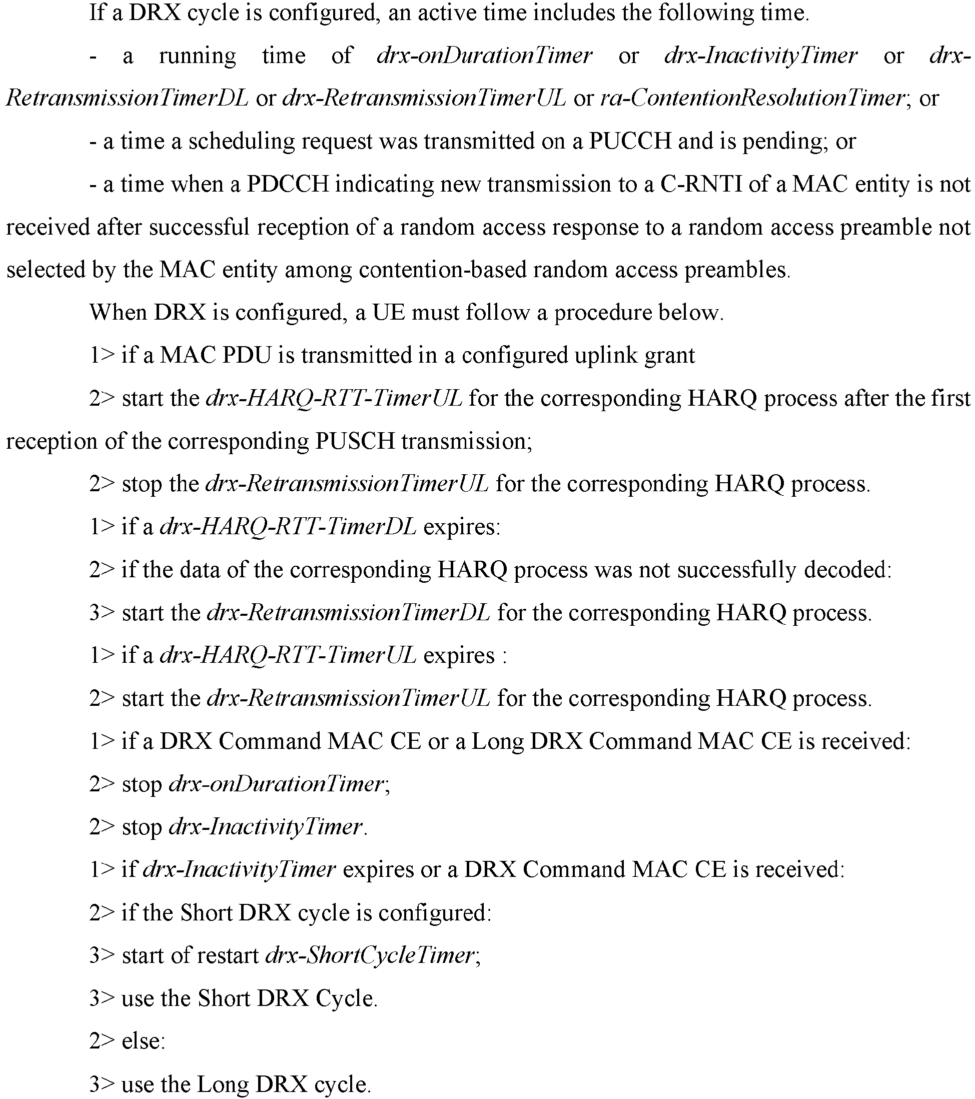

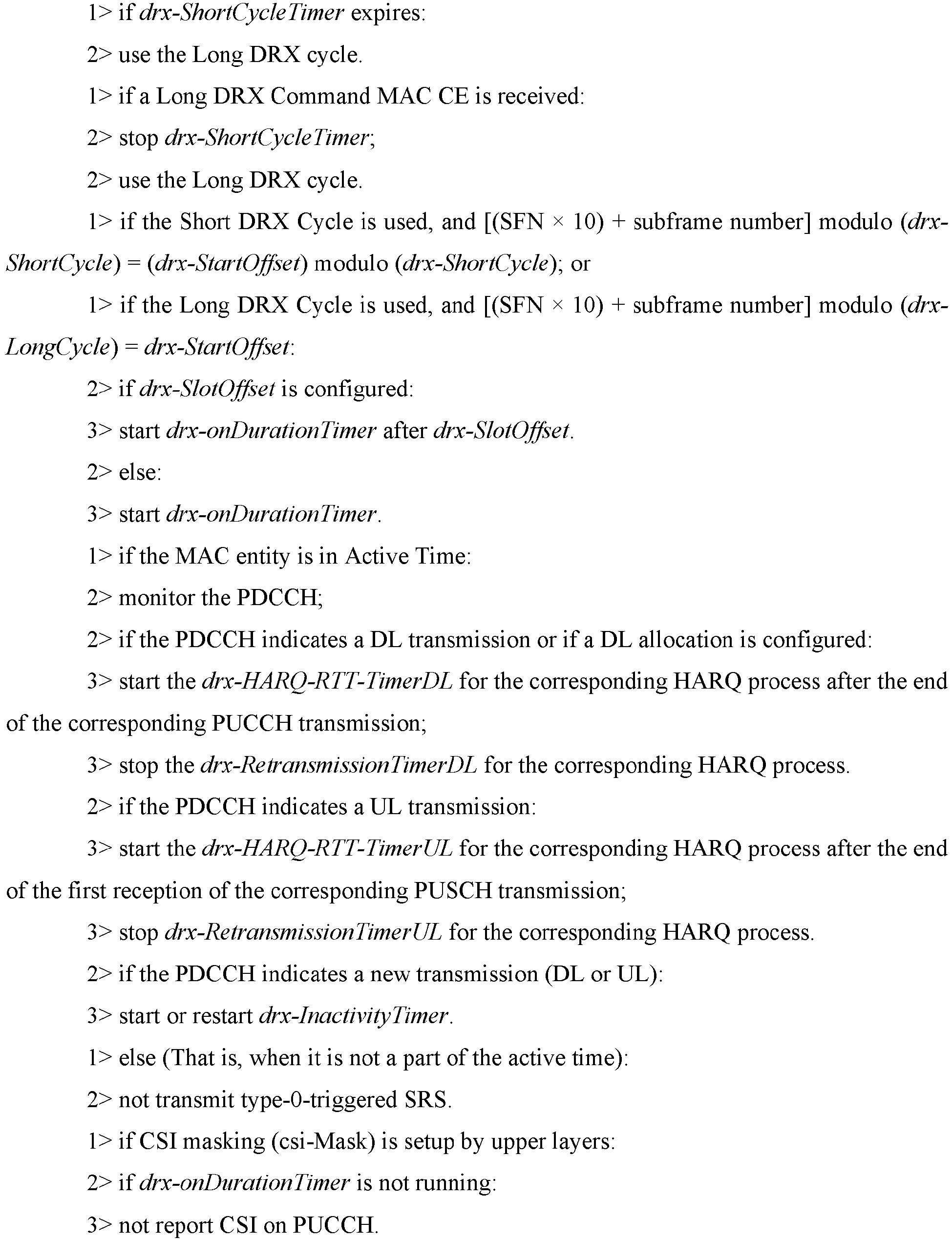

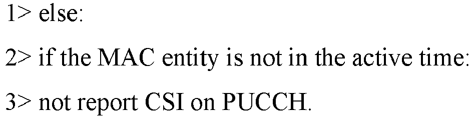

Regardless of whether the MAC entity monitors the PDCCH or not, the MAC entity sends HARQ feedback and type-1-triggered SRS when expected.

If it is not a complete PDCCH time point (i.e., if the active time starts or expires in the middle of the PDCCH time point), the MAC entity does not need to monitor a PDCCH.

Hereinafter, a sidelink control information (SCI) will be described.

Control information transmitted by a BS to a UE through a PDCCH may be referred to as downlink control information (DCI), whereas control information transmitted by the UE to another UE through a PSCCH may be referred to as SCI. For example, the UE may know in advance a start symbol of the PSCCH and/or the number of symbols of the PSCCH, before decoding the PSCCH. For example, the SCI may include SL scheduling information. For example, the UE may transmit at least one SCI to another UE to schedule the PSSCH. For example, one or more SCI formats may be defined.

For example, a transmitting UE may transmit the SCI to a receiving UE on the PSCCH. The receiving UE may decode one SCI to receive the PSSCH from the transmitting UE.

For example, the transmitting UE may transmit two consecutive SCIs (e.g., 2-stage SCI) to the receiving UE on the PSCCH and/or the PSSCH. The receiving UE may decode the two consecutive SCIs (e.g., 2-stage SCI) to receive the PSSCH from the transmitting UE. For example, if SCI configuration fields are divided into two groups in consideration of a (relatively) high SCI payload size, an SCI including a first SCI configuration field group may be referred to as a first SCI or a 1^{st} SCI, and an SCI including a second SCI configuration field group may be referred to as a second SCI or a 2^{nd} SCI. For example, the transmitting UE may transmit the first SCI to the receiving UE through the PSCCH. For example, the transmitting UE may transmit the second SCI to the receiving UE on the PSCCH and/or the PSSCH. For example, the second SCI may be transmitted to the receiving UE through an (independent) PSCCH, or may be transmitted in a piggyback manner together with data through the PSSCH. For example, two consecutive SCIs may also be applied to different transmissions (e.g., unicast, broadcast, or groupcast).

For example, the transmitting UE may transmit the entirety or part of information described below to the receiving UE through the SCI. Herein, for example, the transmitting UE may transmit the entirety or part of the information described below to the receiving UE through the first SCI and/or the second SCI.
- PSSCH and/or PSCCH related resource allocation information, e.g., the number/positions of time/frequency resources, resource reservation information (e.g., period), and/or
- SL CSI report request indicator or SL (L1) RSRP (and/or SL (L1) RSRQ and/or SL (L1) RSSI) report request indicator, and/or
- SL CSI transmission indicator (or SL (L1) RSRP (and/or SL (L1) RSRQ and/or SL (L1) RSSI) information transmission indicator)) (on PSSCH), and/or
- MCS information, and/or
- Transmit power information, and/or
- L1 destination ID information and/or L1 source ID information, and/or
- SL HARQ process ID information, and/or
- New data indicator (NDI) information, and/or
- Redundancy version (RV) information, and/or
- (Transmission traffic/packet related) QoS information, e.g., priority information, and/or
- SL CSI-RS transmission indicator or information on the number of (to-be-transmitted) SL CSI-RS antenna ports, and/or
- Location information of a transmitting UE or location (or distance region) information of a target receiving UE (for which SL HARQ feedback is requested), and/or
- Reference signal (e.g., DMRS, etc.) related to channel estimation and/or decoding of data to be transmitted through a PSSCH, e.g., information related to a pattern of a (time-frequency) mapping resource of DMRS, rank information, antenna port index information

For example, the first SCI may include information related to channel sensing. For example, the receiving UE may decode the second SCI by using a PSSCH DMRS. A polar code used in a PDCCH may be applied to the second SCI. For example, in a resource pool, a payload size of the first SCI may be identical for unicast, groupcast, and broadcast. After decoding the first SCI, the receiving UE does not have to perform blind decoding of the second SCI. For example, the first SCI may include scheduling information of the second SCI.

Meanwhile, in various embodiments of the present disclosure, since a transmitting UE may transmit at least one of a SCI, a first SCI, and/or a second SCI to a receiving UE through a PSCCH, the PSCCH may be replaced/substituted with at least one of the SCI, the first SCI and/or the second SCI. Additionally/alternatively, for example, the SCI may be replaced/substituted with at least one of the PSCCH, the first SCI, and/or the second SCI. Additionally/alternatively, for example, since a transmitting UE may transmit a second SCI to a receiving UE through a PSSCH, the PSSCH may be replaced/substituted with the second SCI.

In this specification, the wording "configuration or definition" may be interpreted as being (pre)configured (via predefined signaling (e.g., SIB, MAC signaling, RRC signaling)) from a base station or network. For example, "A may be configured" may include "(pre)configuring/defining or notifying A of a base station or network for a UE". Alternatively, the wording "configure or define" may be interpreted as being previously configured or defined by the system. For example, "A may be configured" may include "A is configured/defined in advance by the system".

Meanwhile, in Release 16 NR V2X, a power saving operation of a UE was not supported, and a power saving operation of a UE (e.g., a pedestrian UE) will be supported from Release 17 NR V2X. Accordingly, SL DRX configuration for power saving operation (e.g., sidelink (SL) DRX operation) of a UE may need to be defined.

In the embodiment(s) of the present disclosure, an SL DRX configuration for a power saving operation of a UE is defined, and a method for enabling a UE to smoothly perform an SL DRX operation using a defined SL DRX configuration is proposed. In the following description, 'when, if, in case of may be replaced with 'based on'.

According to an embodiment of the present disclosure, a method for enabling a UE to perform an SL DRX operation using a common SL DRX configuration, by defining one default/common SL DRX configuration based on the QoS requirements (e.g. PC5 QoS flow identifier (QFI), packet delay budget (PDB)) of a V2X service or SL service, is proposed.

Table 7 shows parameters of SL DRX configuration according to an embodiment of the present disclosure.

**[Table 7]**

| | ● Sidelink DRX configurations |
|---|---|
| ✔ | *SL drx-onDurationTimer: the duration at the beginning of a DRX Cycle;* |
| ✔ | *SL drx-SlotOffset: the delay before starting the drx-onDurationTimer;* |
| ✔ | *SL drx-InactivityTimer: the duration after the PSCCH occasion in which a PSCCH indicates a new SL transmission for the MAC entity;* |
| ✔ | *SL drx-RetransmissionTimer (per HARQ process): the maximum duration until a retransmission is received;* |
| ✔ | *SL drx-LongCycleStartOffset: the Long DRX cycle and drx-StartOffset which defines the subframe where the Long and Short DRX Cycle starts;* |
| ✔ | *SL drx-ShortCycle (optional): the Short DRX cycle;* |
| ✔ | *SL drx-ShortCycleTimer (optional): the duration the UE shall follow the Short DRX cycle; SL drx-HARQ-RTT-Timer (per HARQ process): the minimum duration before an assignment for HARQ retransmission is expected by the MAC entity.* |

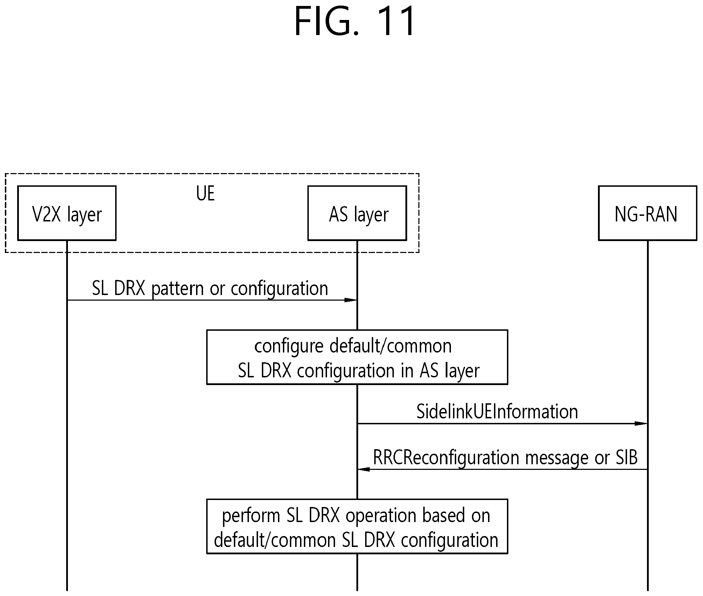

FIG. 11 shows a procedure for a UE to perform an SL DRX operation based on default/common SL DRX configuration according to an embodiment of the present disclosure. The embodiment of FIG. 11 may be combined with various embodiments of the present disclosure.

Referring to FIG. 11, an embodiment of configuring one default/common SL DRX configuration for a UE based on QoS requirements of a V2X service or a sidelink service is shown. For example, (step 1) a V2X layer of a UE may create SL DRX pattern (e.g., SL DRX cycle, SL DRX on-duration) information for an SL DRX operation of the UE based on the QoS requirements of a V2X service generated in the application layer and transmit it to the AS layer, or create an SL DRX configuration and pass it to the AS layer.

(step 2) In addition, the AS layer of the UE may generate a default/common SL DRX configuration based on the SL DRX pattern information (the length of SL DRX cycle and SL DRX on-duration, or the length of SL DRX on-duration and the length of SL DRX off-duration) received from the V2X layer, and use the default/common SL DRX configuration for SL DRX operation.

(step 3) In addition, the UE may transmit QoS requirement information (PFI, PDB) for the UE's V2X service and a preferred default/common SL DRX configuration to the base station. For example, if steps 1 and 2 are omitted, only QoS requirement information for the V2X service can be transmitted to a base station, and the base station may generate common SL DRX configuration information to be used by UEs based on the corresponding information and deliver it to UEs.

(step 4) In addition, the UE may perform SL DRX operation and sidelink transmission/reception using the common SL DRX configuration transmitted from the base station.

According to an embodiment of the present disclosure, if only one default/common SL DRX configuration is allowed based on the QoS requirements of a V2X service or SL service, a problem in which the probability of resource collision between different UEs and the level of congestion/interference increase in the SL DRX on-duration period of the SL DRX configuration may occur. Therefore, in this embodiment, a method for reducing the probability of resource collision between different UEs in an SL DRX on-duration period of a common SL DRX configuration is proposed as follows.

For example, the wakeup start point of the common SL DRX configuration, the start point of the SL DRX cycle, the wake-up duration (SL DRX on-duration length) or the repeating period of the wake-up duration (e.g., SL DRX on-duration) of the common SL DRX configuration (common SL DRX cycle) may be defined to be determined based on parameters such as application/service ID (and/or (L1 or L2) (source/destination) ID). Through this, the probability of resource collision between different UEs performing the SL DRX operation may be reduced. For example, the wake-up time may include the SL DRX on-duration start time point. For example, a method for determining a repeating period of the wake-up start time point of the common SL DRX configuration, the start time point of the SL DRX cycle, the wake-up duration, or the wakeup duration of the common SL DRX configuration may include a method of determining through hopping/randomize.

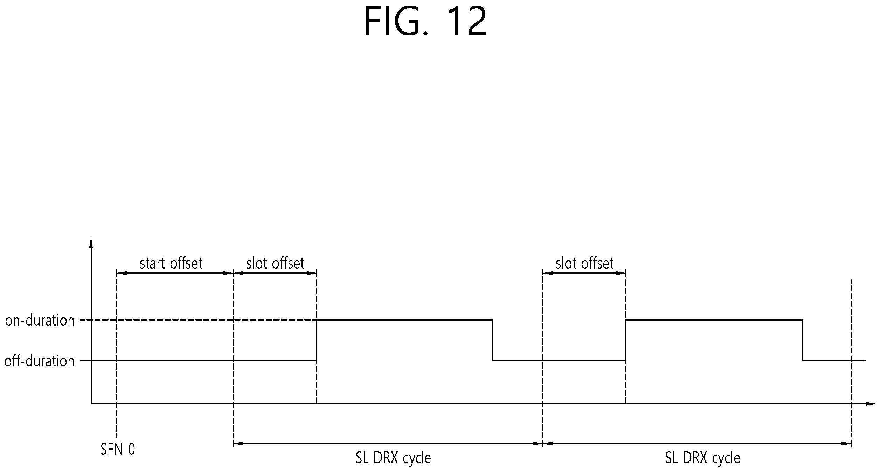

FIG. 12 shows an example in which start offset and slot offset among parameters of SL DRX configuration are applied according to an embodiment of the present disclosure. The embodiment of FIG. 12 may be combined with various embodiments of the present disclosure.

Referring to FIG. 12, the sequence in which an SL DRX cycle starts from SFN 0 according to time is shown. For example, an SL DRX configuration based on which a UE performs SL DRX may include information related to start offset and slot offset. For example, the UE performing an SL DRX operation may repeat on-duration and off-duration after the SL DRX cycle starts, and become active mode in the on-duration period, perform SL communication. For example, the UE may be off-duration at SFN 0 time point. The SL DRX cycle may be started at a time point past the start offset from SFN 0. And, the SL DRX cycle may be repeated periodically. Here, for example, when a slot offset passes from the start time point of each SL DRX cycle, the UE may start an on-duration timer to start on-duration. And, when the on-duration timer expires, the UE may be placed in off-duration again. Thereafter, when the next SL DRX cycle comes, the SL DRX operation may be repeatedly performed. According to an embodiment of the present disclosure, the start offset may be determined specifically for a destination ID related to a service of SL data transmitted/received within on-duration. For example, a mapping relationship may exist between the destination ID and the start offset.

In addition, for example, a plurality of common SL DRX configurations may be allowed specifically for V2X or SL service/QoS. Here, a UE may randomly select one of them (or select it in a UE implementation manner) or may preferentially select a common SL DRX configuration with a relatively low interference level based on interference levels, etc. measured (in the past) on a reception slot related to a wake-up duration (e.g., common SL DRX on-duration) of a common SL DRX configuration. Alternatively, for example, the UE may randomly select one of the common SL DRX configurations below a threshold pre-configured specifically for service/QoS.

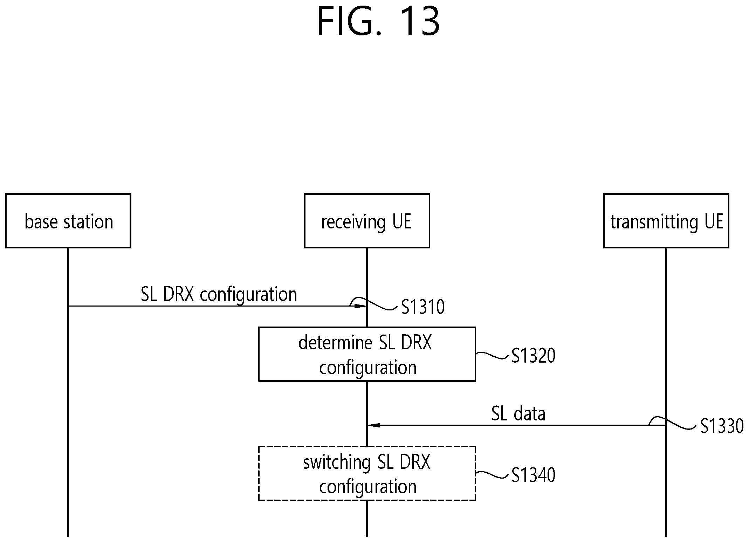

FIG. 13 shows a procedure for performing SL communication by a receiving UE performing an SL DRX operation according to an embodiment of the present disclosure. The embodiment of FIG. 13 may be combined with various embodiments of the present disclosure.

Referring to FIG. 13, in step S 1310, a base station may transmit information regarding a plurality of SL DRX configurations to a receiving UE. The plurality of SL DRX configurations may include SL DRX parameters described in this disclosure. For example, the plurality of SL DRX configurations may be configurations related to a specific service/QoS. In step S1320, the receiving UE may determine an SL DRX configuration to be used for its own SL DRX operation among the plurality of SL DRX configurations. For example, the receiving UE may select an SL DRX configuration based on the service/QoS related to the SL communication it performs. For example, the receiving UE may perform SL communication based on parameters of the selected SL DRX configuration. In step S1330, the receiving UE may receive SL data from the transmitting UE at an active time of the selected SL DRX configuration. In step S 1340, the receiving UE may switch from the selected SL DRX configuration to the plurality of SL DRX configurations when a specific condition is satisfied. For example, the specific condition may include a case where a congestion/interference level on a pattern related to a selected SL DRX configuration is lower than a pre-configured threshold.

According to an embodiment of the present disclosure, in addition to the method of randomly configuring the default/common SL DRX configuration (or default/common SL DRX pattern) or SL DRX-related parameters included in the default/common SL DRX configuration, if the conditions described in the proposal are satisfied, a UE may increase the SL DRX on-duration (or active time period) or apply a separately configured SL DRX timer value (e.g. relatively large values) in advance. That is, for example, in order to select a resource with less interference, a UE may increase the time region of a candidate resource. For example, the conditions described in the above proposal may include a case in which the probability of resource collision between different UEs and the level of congestion/interference increases, a case in which a resource collision probability between different UEs exceeds a threshold value, or a case in which a congestion/interference level between different UEs exceeds a threshold value. For example, the SL DRX timer separately configured in advance may include an SL DRX timer included in an SL DRX configuration mentioned in this disclosure or an SL DRX related timer defined to support other SL DRX operations.

According to an embodiment of the present disclosure, when switching from SL DRX-related parameters included in the selected default/common SL DRX configuration (or default/common SL DRX pattern) or default/common SL DRX configuration to SL DRX-related parameters contained in another default/common SL DRX configuration (or default/common SL DRX pattern) or default/common SL DRX configuration, a congestion/interference level hysteresis can be configured. For example, only when the difference in congestion/interference level in the existing/new configuration or pattern is greater than a pre-configured hysteresis value, and at the same time, if the congestion/interference level in the new configuration or pattern is lower than a pre-configured threshold, a UE may be allowed to switch to parameters of a new common SL DRX configuration, common SL DRX pattern, or common SL DRX configuration. In addition, for example, switching to another configuration or pattern may be configured to be limitedly allowed only when TB-related retransmission is completed when resource reselection is triggered, when a UE operates in long DRX operation or when a timer expires and a UE operates based on SL on-duration.

According to an embodiment of the present disclosure, if a service-related SL DRX on-duration or active period of higher priority/requirement (partially) overlaps with a service-related SL DRX on-duration or active period of lower priority/requirement, in order to reduce interference to high priority/requirement services (within the overlapping interval), (maximum, minimum, or average) transmission power value, TB-related (maximum) number of retransmissions, upper bound value of channel occupancy ratio (CR) value, etc. used for transmission of low priority/requirement services may be limitedly configured. For example, the active period may mean a period in which a UE is in a wake-up state to receive or transmit a sidelink signal including SL DRX on-duration.

According to an embodiment of the present disclosure, when the zone area where a UE is located is changed (or when the zone ID where a UE is located is changed), randomization of selection for at least one of a common SL DRX configuration, a common SL DRX pattern, an SL DRX operating parameter included in the common SL DRX configuration, and a timer, configuration, pattern, and/or DRX operating parameter included in the configuration may be triggered or permitted.

According to an embodiment of the present disclosure, when a UE changes from In-Coverage to Out-Of-Coverage state or when a UE changes from Out-of-Coverage to In-Coverage state, randomization of selection for at least one of a common SL DRX configuration, a common SL DRX pattern, an SL DRX operating parameter included in the common SL DRX configuration, and a timer, configuration, pattern, and/or DRX operating parameter included in the configuration may be triggered or permitted.

According to an embodiment of the present disclosure, when the Cell ID where a UE is located is changed, randomization of selection for at least one of a common SL DRX configuration, a common SL DRX pattern, an SL DRX operating parameter included in the common SL DRX configuration, and a timer, configuration, pattern, and/or DRX operating parameter included in the configuration may be triggered or permitted.

According to an embodiment of the present disclosure, when the carrier type (e.g., licensed carrier, ITS-dedicated carrier) of a UE is changed, randomization of selection for at least one of a common SL DRX configuration, a common SL DRX pattern, an SL DRX operating parameter included in the common SL DRX configuration, and a timer, configuration, pattern, and/or DRX operating parameter included in the configuration may be triggered or permitted.

According to an embodiment of the present disclosure, when the communication type/direction (e.g., V2P, P2P, P2V) of a UE is changed, randomization of selection for at least one of a common SL DRX configuration, a common SL DRX pattern, an SL DRX operating parameter included in the common SL DRX configuration, and a timer, configuration, pattern, and/or DRX operating parameter included in the configuration may be triggered or permitted.

According to an embodiment of the present disclosure, when the remaining battery amount of a UE is changed, randomization of selection for at least one of a common SL DRX configuration, a common SL DRX pattern, an SL DRX operating parameter included in the common SL DRX configuration, and a timer, configuration, pattern, and/or DRX operating parameter included in the configuration may be triggered or permitted.

According to an embodiment of the present disclosure, when the V2X (or SL) service ID/type of a UE is changed, randomization of selection for at least one of a common SL DRX configuration, a common SL DRX pattern, an SL DRX operating parameter included in the common SL DRX configuration, and a timer, configuration, pattern, and/or DRX operating parameter included in the configuration may be triggered or permitted.

According to an embodiment of the present disclosure, when (default/common) SL DRX pattern/configuration information is exchanged through higher layer signaling, a mechanism may be required to have a common understanding of the (default/common) SL DRX pattern/configuration start point (e.g., SL DRX on-duration start point) between UEs. Therefore, in the present disclosure, an SL DRX confirmation message (e.g., a message reporting SL DRX pattern/configuration information or an ACK message for the SL DRX pattern/configuration report message) is defined, a method of considering the time when a UE receives this as a reference timing (e.g., SL DRX on-duration start time point), a method of signaling information on reference timing related to an SL DRX pattern through additional higher layer signaling, or a method of considering a time point at which a previously configured/exchanged slot offset value is applied from DFN 0 based on a SYNC source is proposed as a reference timing are proposed. For example, the SL DRX pattern/configuration information may include SL DRX cycle, SL DRX on-duration interval information, and the like. For example, the higher layer signaling may include MAC CE and PC5 RRC. For example, the additional higher layer signaling may include a SL DRX confirm message, a SIB, a DL dedicated RRC message, and/or a PC5 RRC message.

For example, the proposal of the present disclosure may be extended and applied to UE-pair specific SL DRX configuration, UE-pair specific SL DRX pattern, or parameters included in UE-pair specific SL DRX configuration (and timer), etc. as well as the default/common SL DRX configurations, default/common SL DRX patterns, or parameters (and timers) included in default/common SL DRX configurations, and the like. In addition, the on-duration term mentioned in the proposal of the present disclosure may be extended and interpreted as an active time period (a period in which a UE operates in an awake state to receive/transmit a radio signal). In addition, whether (some) proposed schemes/rules of the present disclosure are applied and/or related parameters (e.g., threshold values) may be specifically (or differently, or independently) configured according to resource pool, congestion level, service priority (and/or type), requirements (eg latency, reliability), traffic type (eg (non)periodic generation), SL transmission Resource allocation mode (mode 1, mode 2), etc. For example, the wake-up state may mean a state in which an RF module of a UE is on.

According to an embodiment of the present disclosure, when a plurality of UEs use a common SL DRX configuration, by providing a method for reducing the probability of resource collision between UEs on the SL DRX on-duration interval, UEs can perform SL DRX operations without resource collision without using UE-specific SL DRX configurations.

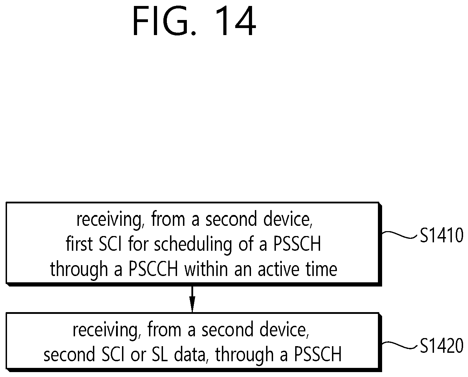

FIG. 14 shows a procedure for performing wireless communication by a first device according to an embodiment of the present disclosure. The embodiment of FIG. 14 may be combined with various embodiments of the present disclosure.

Referring to FIG. 14, in step S1410, a first device may receive, from a second device, first sidelink control information, SCI, for scheduling of a physical sidelink shared channel, PSSCH, through a physical sidelink control channel, PSCCH, within an active time, based on the first SL DRX configuration including information related to an SL DRX cycle and information related to an on-duration timer. In step S1420, the first device may receive, from the second device, second SCI or SL data, through the PSSCH. For example, a start time point of the on-duration timer may be configured based on a destination identifier, ID, related to the SL data.

For example, the first SL DRX configuration may include information related to start offset or slot offset.

For example, the start time point may be configured based on the start offset of the first SL DRX configuration, determined based on the destination ID.

For example, the start time point may be configured based on the slot offset of the first SL DRX configuration, determined based on the destination ID.

For example, the SL DRX cycle may be determined based on the destination ID.

For example, the start time point of the SL DRX cycle may be determined based on the destination ID.

For example, additionally, the first device may receive, from a base station, the first SL DRX configuration.

For example, the first SL DRX configuration may be generated in an access stratum, AS, layer of the first device.

For example, the first SL DRX configuration may be a default SL DRX configuration or a common SL DRX configuration.

For example, additionally, the first device may select the first SL DRX configuration among a plurality of SL DRX configurations related to the destination ID, based on interference level related to each of the plurality of SL DRX configurations.

For example, additionally, the first device may select a second SL DRX configuration among a plurality of SL DRX configurations related to the destination ID; and switch from the second SL DRX configuration to the first SL DRX configuration, based on interference level related to an active time of the first SL DRX configuration, interference level related to an active time of the second SL DRX configuration, and a hysteresis value.

For example, additionally, the first device may receive, from the second device, the first SL DRX configuration. For example, a reference time point of the first SL DRX configuration may be determined based on a time point when the first SL DRX configuration is received.

For example, additionally, the first device may receive, from the second device, the first SL DRX configuration; and receive, from the second device, information related to slot offset. For example, a reference time point of the first SL DRX configuration may be determined based on direct frame number, DFN, 0 related to the first device and the second device, and the slot offset.

The above-described embodiment may be applied to various devices described below. For example, a processor 102 of a first device 100 may control a transceiver 106 to receive, from a second device 200, first sidelink control information, SCI, for scheduling of a physical sidelink shared channel, PSSCH, through a physical sidelink control channel, PSCCH, within an active time, based on the first SL DRX configuration including information related to an SL DRX cycle and information related to an on-duration timer. And, the processor 102 of the first device 100 may control the transceiver 106 to receive, from the second device 200, second SCI or SL data, through the PSSCH. For example, a start time point of the on-duration timer may be configured based on a destination identifier, ID, related to the SL data.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: receive, from a second device, first sidelink control information, SCI, for scheduling of a physical sidelink shared channel, PSSCH, through a physical sidelink control channel, PSCCH, within an active time, based on the first SL DRX configuration including information related to an SL DRX cycle and information related to an on-duration timer; and receive, from the second device, second SCI or SL data, through the PSSCH. For example, a start time point of the on-duration timer may be configured based on a destination identifier, ID, related to the SL data.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: receive, from a second UE, first sidelink control information, SCI, for scheduling of a physical sidelink shared channel, PSSCH, through a physical sidelink control channel, PSCCH, within an active time, based on the first SL DRX configuration including information related to an SL DRX cycle and information related to an on-duration timer; and receive, from the second UE, second SCI or SL data, through the PSSCH, wherein a start time point of the on-duration timer may be configured based on a destination identifier, ID, related to the SL data.

According to an embodiment of the present disclosure, a non-transitory computer-readable storage medium storing instructions may be proposed. For example, the instructions, when executed, may cause a first device to: receive, from a second device, first sidelink control information, SCI, for scheduling of a physical sidelink shared channel, PSSCH, through a physical sidelink control channel, PSCCH, within an active time, based on the first SL DRX configuration including information related to an SL DRX cycle and information related to an on-duration timer; and receive, from the second device, second SCI or SL data, through the PSSCH, wherein a start time point of the on-duration timer may be configured based on a destination identifier, ID, related to the SL data.

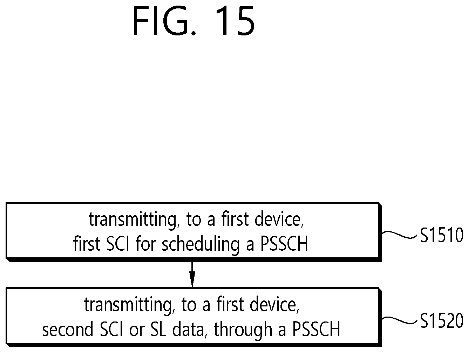

FIG. 15 shows a procedure for a second device to perform wireless communication according to an embodiment of the present disclosure. The embodiment of FIG. 15 may be combined with various embodiments of the present disclosure.

Referring to FIG. 15, in step S1510, a second device may transmit, to a first device, first sidelink control information, SCI, for scheduling a physical sidelink shared channel, PSSCH, through a physical sidelink control channel, PSCCH. In step S1520, the second device may transmit, to the first device, second SCI or SL data, through the PSSCH. For example, the PSSCH may be received within an active time of a first sidelink, SL, discontinuous reception, DRX, configuration by the first device, the first SL DRX configuration may include information related to an SL DRX cycle and information related to an on-duration timer, and a start time point of the on-duration timer may be configured based on a destination identifier, ID, related to the SL data.

For example, additionally, the second device may transmit, to the first device, the first SL DRX configuration; and transmit, to the first device, information related to slot offset. For example, a reference time point of the first SL DRX configuration may be determined based on direct frame number, DFN, 0 related to the first device and the second device, and the slot offset.

The above-described embodiment may be applied to various devices described below. For example, a processor 202 of a second device 200 may control a transceiver 206 to transmit, to a first device 1000, first sidelink control information, SCI, for scheduling a physical sidelink shared channel, PSSCH, through a physical sidelink control channel, PSCCH. And, the processor 202 of the second device 200 may control the transceiver 206 to transmit, to the first device 100, second SCI or SL data, through the PSSCH.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: transmit, to a first device, first sidelink control information, SCI, for scheduling a physical sidelink shared channel, PSSCH, through a physical sidelink control channel, PSCCH; and transmit, to the first device, second SCI or SL data, through the PSSCH, wherein the PSSCH may be received within an active time of a first sidelink, SL, discontinuous reception, DRX, configuration by the first device, wherein the first SL DRX configuration may include information related to an SL DRX cycle and information related to an on-duration timer, and wherein a start time point of the on-duration timer may be configured based on a destination identifier, ID, related to the SL data.

For example, the one or more processors may execute the instructions to: transmit, to the first device, the first SL DRX configuration; and transmit, to the first device, information related to slot offset, wherein a reference time point of the first SL DRX configuration may be determined based on direct frame number, DFN, 0 related to the first device and the second device, and the slot offset.

In order for a DRX operation to be performed in the sidelink, the same understanding of the start of an SL DRX cycle may be required between a transmitting UE and receiving UE. According to an embodiment of the present disclosure, if the start of an SL DRX cycle is determined based on a destination ID related to the service, the understanding of the start of the cycle is matched between both UEs, and there is an advantage in that SL communication can be smoothly performed while performing the SL DRX operation.

According to an embodiment of the present disclosure, a method for configuring an SL DRX configuration specific for PC5 unicast link (or PC5 link ID, source L2 ID/destination L2 ID pair, cast type and destination L2 ID, cast type and source L2 ID/destination ID, cast type and source L2 ID, or PC5 Unicast QoS Class (PQI)) is proposed.

Table 8 shows parameters included in SL DRX configuration according to an embodiment of the present disclosure.

**[Table 8]**

| | • Sidelink DRX configurations |
|---|---|
| ✔ | *SL drx-onDurationTimer*: the duration at the beginning of a SL DRX Cycle; |
| ✔ | *SL drx-SlotOffset*: the delay before starting the sl *drx*-*onDurationTimer*; |
| ✔ | *SL drx-InactivityTimer*: the duration after the PSCCH occasion in which a PSCCH indicates a new SL transmission for the MAC entity; |
| ✔ | *SL drx-StartOffset*: the subframe where the SL DRX cycle start; |
| ✔ | *SL drx-Cycle*: the SL DRX cycle; |
| ✔ | *SL drx-HARQ-RTT-Timer* (per HARQ process or per sidelink process): the minimum duration before an assignment for HARQ retransmission is expected by the MAC entity. |
| ✔ | *SL drx-RetransmissionTimer* (per HARQ process or per sidelink process): the maximum duration until a retransmission is received |

For example, when full-fledged transmission and reception proceeds from a transmitting UE in an SL DRX on-duration interval (or when PC5 unicast link and PC5 RRC connection are established), an SL DRX configuration of a receiving UE needs to be reconfigure specifically to the unicast peer receiving UE, or needs to be reconfigured specifically for QoS requirements (e.g., PQI) of sidelink data (or sidelink service). That is, while SL DRX configuration (or common SL DRX configuration) used by a UE (or used for groupcast/broadcast communication) before PC5 unicast link and PC5 RRC connection are established may be configured to a long SL DRX configuration commonly used by all UEs (For example, a UE that transmits/receives data of the same group cast service (PS-ID, ITS-AID), or a UE that transmits/receives data of the same broadcast service (PS-ID, ITS-AID)) supporting sidelink communication to monitor sidelink signals of neighboring UEs, a UE-specific SL DRX configuration may be configured as a short SL DRX configuration to satisfy QoS requirements (e.g. PQI (PC5 5QI) or PFI (PC5 QoS Flow Identifier)) of PC5 unicast link specific sidelink data (or sidelink service) between a transmitting UE and a receiving UE. Alternatively, for example, a UE-specific SL DRX configuration may be configured to a different SL DRX configuration for each PC5 unicast link (or PC5 connection ID, source L2 ID/destination L2 ID pair, cast type and destination L2 ID, cast type and source L2 ID/destination ID, cast type and source L2 ID, or PC5 unicast QoS class (PQI)) between a transmitting UE and a receiving UE. For example, the PQI may include PDB or delay requirements among PQI contents.

For example, a PC5 unicast link specific SL DRX configuration may be configured to a short SL DRX configuration (e.g., a short SL DRX cycle, an SL DRX on-duration period, a start offset of an SL DRX on-duration, etc.) with a shorter period than a common SL DRX configuration.

According to an embodiment of the present disclosure, when an SL DRX configuration configured based on a PC5 unicast link (or, a PC5 link ID, source L2 ID/destination L2 ID, a cast type and a source L2 ID, or PC5 unicast QoS class (PQI)) specific SL short DRX cycle is configured, a UE may negotiate whether to "support a short DRX cycle" by delivering an indication of the capability of "support a short DRX cycle" indicating that a short DRX cycle is supported for configuring a UE specific SL DRX configuration to a counterpart peer UE, in a step of performing a capability negotiation through a PC5 RRC message, right after a PC5-S link is configured with the counterpart peer UE. In addition, for example, a UE may enquire whether to "support a short DRX cycle" of a counterpart peer UE (a UE with which a unicast UE link is established) through a PC5 RRC message, and may be responded whether to "support a short DRX cycle" from the counterpart peer UE. For example, when a UE (a UE enquired the capability of whether to "support a short DRX cycle") receives whether to "support a short DRX cycle" of the counterpart peer UE in the step of the PC5 capability negotiation, the UE may report whether to "support a short DRX cycle" of the counterpart peer UE along with whether to "support a short DRX cycle" of its own to a base station (e.g., through SidelinkUEInformation). Through this, a base station may configure an SL DRX configuration considering whether to support a short DRX cycle of a UE which has reported the SidelinkUEInformation and whether to support a short DRX cycle of a UE which established a Pc5 unicast link with a UE which has reported the SidelinkUEInformation, and may deliver the configured SL DRX configuration to a UE which has reported SidelinkUEInformation. For example, a UE which received the configured SL DRX configuration from a base station may deliver the SL DRX configuration received from a base station to the counterpart peer UE, through a PC5 RRC message. For example, when a UE delivers SidelinkUEInformation including the capability of "support of a short DRX cycle" of a counterpart peer UE to a base station, the UE may include an identifier that can distinguish the PC5 unicast link established with the counterpart peer UE (a PC5 link ID, a pair of a source L2 ID/destination L2 ID, or a pair of a cast type and a source L2 ID/destination L2 ID) to the SidelinkUEInformation as well, and deliver.

According to an embodiment of the present disclosure, an SL DRX configuration applied to PC5 unicast communication of a UE is not an SL DRX configuration configured for each specific PC5 unicast link (or, a PC5 link ID, a pair of a source L2 ID/destination L2 ID, a cast type and a destination L2 ID, a cast type and a source L2 ID/destination IE, a cast type and a source L2 ID, or a PC5 unicast QoS class (PQI)), but it may be a common SL DRX configuration which may be applied to all unicast communication, and a method for configuring the common SL DRX configuration is proposed as follow.

Table 9 shows SL DRX configurations common to PC5 unicast links.

**[Table 9]**

| |
|---|
| ◆ *SL drx-onDurationTimer*: the duration at the beginning of a SL DRX Cycle; |
| ◆ *SL drx-InactivityTimer*: the duration after the PSCCH occasion in which a PSCCH indicates a new SL transmission for the MAC entity; |
| ◆ *SL short drx-Cycle*: the short SL DRX cycle; |
| ◆ *SL drx-HARQ-RTT-Timer* (per HARQ process or per sidelink process): the minimum duration before an assignment for HARQ retransmission is expected by the MAC entity. |
| ◆ SL *drx-RetransmissionTimer* (per HARQ process or per sidelink process): the maximum duration until a retransmission is received |

However, for example, even if the PC5 unicast common SL DRX configuration is applied, by configuring the following sl drx-startoffset to an independent value for each PC5 unicast link (or, a PC5 link ID, a pair of a source L2 ID/destination L2 ID, a cast type and a destination L2 ID, a cast type and a source L2 ID/destination IE, a cast type and a source L2 ID, or a PC5 unicast QoS class (PQI)), the starting point of an SL DRX cycle can be distributed for each PC5 unicast link. Also, for example, even if the PC5 unicast common SL DRX configuration is applied, by configuring the following sl drx-slotoffset to an independent value for each PC5 unicast link (or, a PC5 link ID, a pair of a source L2 ID/destination L2 ID, a cast type and a destination L2 ID, a cast type and a source L2 ID/destination IE, a cast type and a source L2 ID, or a PC5 unicast QoS class (PQI)), the starting point of an SL DRX on-duration timer can be distributed for each PC5 unicast link.

For example, the PC5 unicast link (or, a PC5 link ID, a pair of a source L2 ID/destination L2 ID, a cast type and a destination L2 ID, a cast type and a source L2 ID/destination IE, a cast type and a source L2 ID, or a PC5 unicast QoS class (PQI)) specific SL drx-StartOffset may be a subframe in which an SL DRX cycle starts.

For example, the PC5 unicast link (or, a PC5 link ID, a pair of a source L2 ID/destination L2 ID, a cast type and a destination L2 ID, a cast type and a source L2 ID/destination IE, a cast type and a source L2 ID, or a PC5 unicast QoS class (PQI)) specific SL drx-SlotOffset may be a delay before starting an SL DRX on-duration timer.

According to an embodiment of the present disclosure, a method for configuring a common SL DRX configuration is proposed as follows.

For example, a common SL DRX configuration may be SL DRX configuration used by UEs before establishing a PC5 unicast link and a PC5 RRC connection. Alternatively, it may be SL DRX configuration used by a UE for groupcast/broadcast communication. Parameters included in a common DRX configurations below may be configured to independent values for each group cast service (PS-ID, ITS-AID) or broadcast service (PSID, ITS-AID).

For example, parameters included in a common DRX configuration may refer to Table 8 above.

According to an embodiment of the present disclosure, it is proposed that a common SL DRX parameter that is different for each groupcast service or broadcast service is not configured, but it is proposed to configure a common SL DRX configuration commonly applied to all UEs (or, UEs that do not establish PC5 unicast link/PC5 RRC connection) regardless of broadcast service or groupcast service. For example, the common SL DRX configuration may refer to Table 9 above.

However, for example, even if a common SL DRX configuration (or groupcast/broadcast common SL DRX configuration) is applied, the start point of an SL DRX cycle may be distributed for each groupcast/broadcast service, by configuring the sl drx-startoffset below to an independent value for each groupcast/broadcast service. In addition, even if a common SL DRX configuration (or groupcast/broadcast common SL DRX configuration) is applied, the starting time of an SL DRX on-duration timer for each groupcast/broadcast service may be distributed, by configuring the sl drx-slotoffset below to an independent value for each groupcast/broadcast service.

For example, a groupcast/broadcast service (PSID/ITS-AID) or groupcast/broadcast QoS class (PQI) specific SL drx-StartOffset may be a subframe in which an SL DRX cycle starts.

For example, a groupcast/broadcast service (PSID/ITS-AID) or groupcast/broadcast QoS class (PQI) specific SL drx-SlotOffset may be the delay before starting an SL DRX on-duration timer.

For example, the SL DRX configuration and SL DRX timer mentioned in this disclosure may be used for the following purposes. (See Table 8)

For example, the period in which an SL DRX on-duration timer operates may mean a period in which a UE performing an SL DRX operation should basically operate in an active time in order to receive PSCCH/PSSCH from a counterpart UE.

For example, a period in which an SL DRX inactivity timer operates may mean a period in which a UE performing an SL DRX operation extends an SL DRX on-duration period, which is basically a period that should operate as active time, in order to receive a PSCCH/PSSCH of a counterpart UE. That is, an SL DRX on-duration timer may be extended by an SL DRX inactivity timer period. Also, for example, when a UE receives a new packet (new PSSCH transmission) from a counterpart UE, it may start an SL DRX inactivity timer to extend an SL DRX on-duration timer.

For example, an interval where SL DRX HARQ RTT timer operates may mean a period in which a UE performing an SL DRX operation operates in a sleep mode until receiving a retransmission packet (or PSSCH assignment) transmitted by a counterpart UE. That is, for example, a UE may start an SL DRX HARQ RTT timer, operate in sleep mode during the timer while determining that the counterpart UE will not transmit a sidelink retransmission packet to itself until the SL DRX HARQ RTT timer expires.

For example, a period in which an SL DRX retransmission timer operates may mean a period in which a UE performing an SL DRX operation operates during an active time to receive a retransmission packet (or PSSCH allocation) transmitted by a counterpart UE. During the corresponding timer interval, a UE may monitor reception of a retransmitted sidelink packet (or PSSCH allocation) transmitted by a counterpart UE.

For example, in the following description, the names of timers (Uu DRX HARQ RTT Timer SL, Uu DRX Retransmit Timer SL, SL DRX On-Duration Timer, SL DRX Inactivity Timer, SL DRX HARQ RTT Timer, SL DRX Retransmit Timer, etc.) are exemplary, and timers performing the same/similar functions based on the description of each timer may be regarded as the same/similar timers regardless of their names.

For example, the proposal of the present disclosure may be a solution that can be applied and extended as a method of solving a problem in which loss occurs due to interruption occurring during Uu bandwidth part (BWP) switching.

In addition, for example, the proposal of the present disclosure may be a solution that can be applied and extended as a method of solving a problem of loss due to interference occurring during SL BWP switching when a UE supports SL multiple BWP.

For example, the proposal of this disclosure may be extended and applied not only to default/common SL DRX configuration, default/common SL DRX pattern, or parameters (and timer) included in default/common SL DRX Configurations, but parameters included in UE-pair specific SL DRX configuration, UE-pair specific SL DRX pattern, or UE-pair specific SL DRX configuration (and timer), etc. In addition, an on-duration term mentioned in the proposal of the present disclosure may be interpreted as an active time interval, and an off-duration term may be interpreted as an extended sleep time interval. In addition, whether to apply (some) proposed methods/rules of the present disclosure and/or related parameters (e.g., threshold values) may be specifically (or differently, or independently) configured according to resource pool, congestion level, service priority (and/or type), QoS requirements (eg delay, reliability), PQI, traffic type (eg (a)periodic generation), SL transmission resource allocation mode (mode 1, mode 2), etc. For example, the sleep time may refer to an interval operating in a sleep mode for power saving. For example, the sleep mode may mean a state in which the RF module is off. However, the sleep mode does not mean that a transmitting UE must operate in the sleep mode. For example, even during sleep time, if necessary, the transmitting UE may be allowed to operate in an active mode for a while for a sensing operation/transmission operation.

For example, whether the proposed rule of the present disclosure is applied (and/or related parameter configuration value) may be specifically (and/or independently and/or differently) configured for at least one of resource pool, service/packet type (and/or priority), QoS requirements (e.g. URLLC/EMBB traffic, reliability, delay), PQI, cast type (e.g. unicast, groupcast, broadcast), (resource pool) congestion level (e.g., CBR), SL HARQ feedback method (e.g., NACK Only feedback, ACK/NACK feedback), case of transmitting an HARQ feedback enabled MAC PDU (and/or a HARQ feedback disabled MAC PDU), whether to configure a PUCCH-based SL HARQ feedback reporting operation, case that performs pre-emption (and/or re-evaluation) (or reselects resources based on it), (L2 or L1) (source and/or destination) identifier, (L2 or L1) (combination of source ID and destination ID) identifier, (L2 or L1) (combination of source ID and destination ID pair and cast type) identifier, PC5 RRC connection/link, case of performing SL DRX, case of performing SL mode type (resource allocation mode 1, resource allocation mode 2), and (non-)periodic resource reservation case.

The term "specific time" mentioned in the proposal of the present disclosure may refer to a time that operates as active time for a UE to receive a sidelink signal or sidelink data from a counterpart UE for a predefined time, or as active time as a specific timer (for example, SL DRX Retransmission Timer, SL DRX Inactivity Timer, or Timer that guarantees operation in active time in DRX operation of RX UE) operates.

Also, for example, the proposal of the present disclosure and whether the proposed rule is applied (and/or related parameter configuration values) may also be applied to mmWave SL operation.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

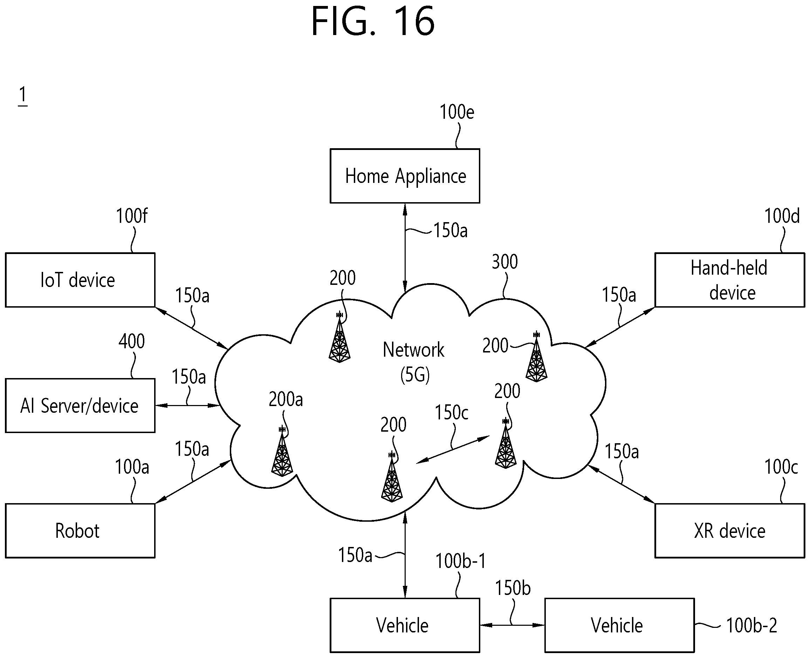

FIG. 16 shows a communication system 1, based on an embodiment of the present disclosure. The embodiment of FIG. 16 may be combined with various embodiments of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

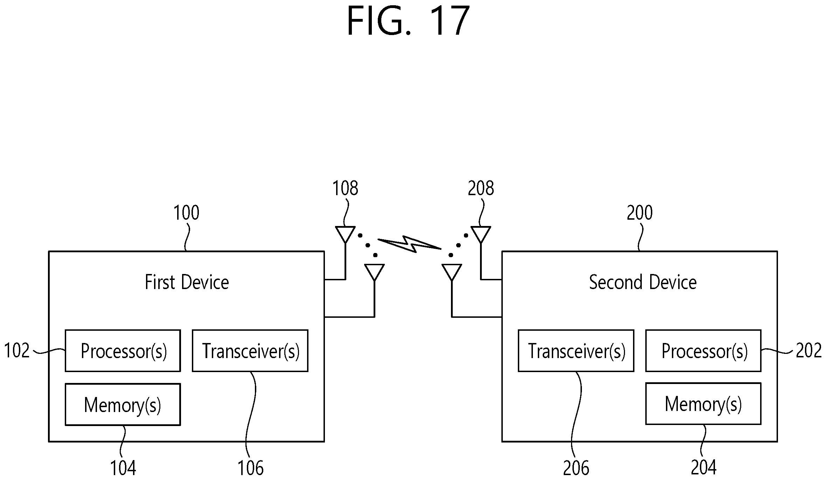

FIG. 17 shows wireless devices, based on an embodiment of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

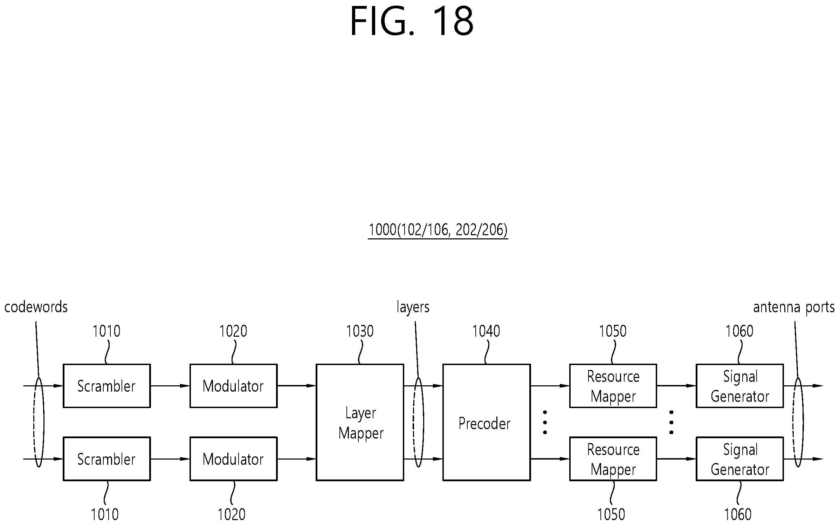

FIG. 18 shows a signal process circuit for a transmission signal, based on an embodiment of the present disclosure.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

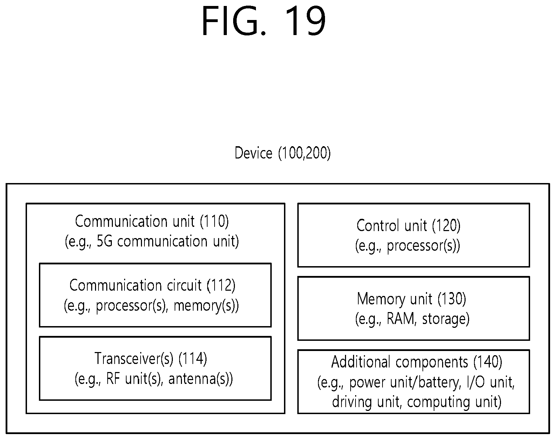

FIG. 19 shows another example of a wireless device, based on an embodiment of the present disclosure. The wireless device may be implemented in various forms according to a usecase/service (refer to FIG. 16).

Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

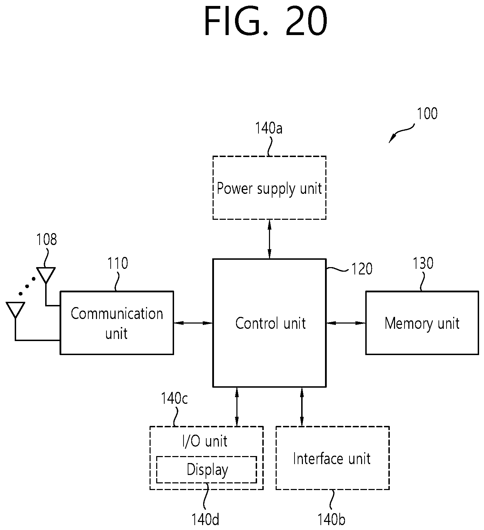

FIG. 20 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

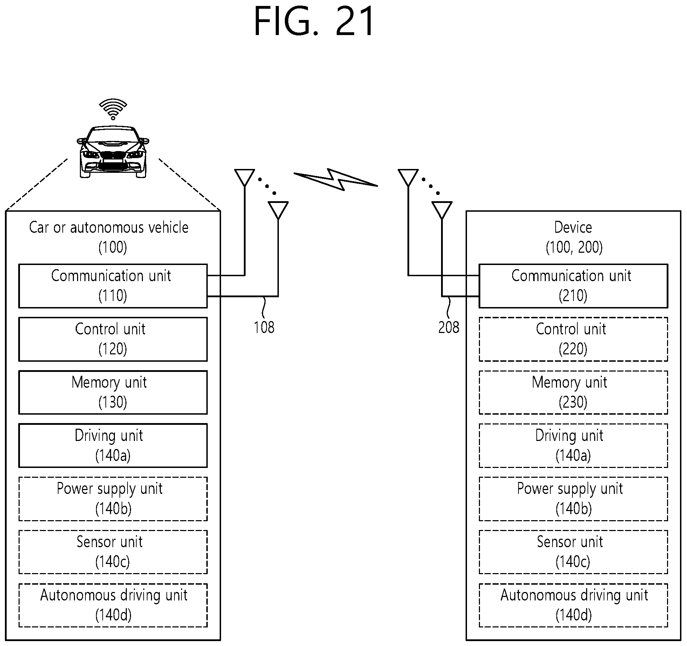

FIG. 21 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc.

Referring to FIG. 21, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication based on a first sidelink, SL, discontinuous reception, DRX, configuration, the method comprising:
receiving, from a second device, first sidelink control information, SCI, for scheduling of a physical sidelink shared channel, PSSCH, through a physical sidelink control channel, PSCCH, within an active time, based on the first SL DRX configuration including information related to an SL DRX cycle and information related to an on-duration timer; and
receiving, from the second device, second SCI or SL data, through the PSSCH,
wherein a start time point of the on-duration timer is configured based on a destination identifier, ID, related to the SL data.

2. The method of claim 1, wherein the first SL DRX configuration includes information related to start offset or slot offset.

3. The method of claim 2, wherein the start time point is configured based on the start offset of the first SL DRX configuration, determined based on the destination ID.

4. The method of claim 2, wherein the start time point is configured based on the slot offset of the first SL DRX configuration, determined based on the destination ID.

5. The method of claim 1, wherein the SL DRX cycle is determined based on the destination ID.

6. The method of claim 5, wherein the start time point of the SL DRX cycle is determined based on the destination ID.

7. The method of claim 1, further comprising:
receiving, from a base station, the first SL DRX configuration.

8. The method of claim 1, wherein the first SL DRX configuration is generated in an access stratum, AS, layer of the first device.

9. The method of claim 1, wherein the first SL DRX configuration is a default SL DRX configuration or a common SL DRX configuration.

10. The method of claim 1, further comprising:
selecting the first SL DRX configuration among a plurality of SL DRX configurations related to the destination ID, based on interference level related to each of the plurality of SL DRX configurations.

11. The method of claim 1, further comprising:
selecting a second SL DRX configuration among a plurality of SL DRX configurations related to the destination ID; and
switching from the second SL DRX configuration to the first SL DRX configuration, based on interference level related to an active time of the first SL DRX configuration, interference level related to an active time of the second SL DRX configuration, and a hysteresis value.

12. The method of claim 1, further comprising:
receiving, from the second device, the first SL DRX configuration,
wherein a reference time point of the first SL DRX configuration is determined based on a time point when the first SL DRX configuration is received.

13. The method of claim 1, further comprising:
receiving, from the second device, the first SL DRX configuration; and
receiving, from the second device, information related to slot offset,
wherein a reference time point of the first SL DRX configuration is determined based on direct frame number, DFN, 0 related to the first device and the second device, and the slot offset.

14. A first device for performing wireless communication, the first device comprising:
one or more memories storing instructions;
one or more transceivers; and
one or more processors connected to the one or more memories and the one or more transceivers, wherein the one or more processors execute the instructions to:
receive, from a second device, first sidelink control information, SCI, for scheduling of a physical sidelink shared channel, PSSCH, through a physical sidelink control channel, PSCCH, within an active time, based on the first SL DRX configuration including information related to an SL DRX cycle and information related to an on-duration timer; and
receive, from the second device, second SCI or SL data, through the PSSCH,
wherein a start time point of the on-duration timer is configured based on a destination identifier, ID, related to the SL data.

15. A device adapted to control a first user equipment, UE, the device comprising:
one or more processors; and
one or more memories operably connectable to the one or more processors and storing instructions, wherein the one or more processors execute the instructions to:
receive, from a second UE, first sidelink control information, SCI, for scheduling of a physical sidelink shared channel, PSSCH, through a physical sidelink control channel, PSCCH, within an active time, based on the first SL DRX configuration including information related to an SL DRX cycle and information related to an on-duration timer; and
receive, from the second UE, second SCI or SL data, through the PSSCH,
wherein a start time point of the on-duration timer is configured based on a destination identifier, ID, related to the SL data.

16. A non-transitory computer-readable storage medium storing instructions that, when executed, cause a first device to:
receive, from a second device, first sidelink control information, SCI, for scheduling of a physical sidelink shared channel, PSSCH, through a physical sidelink control channel, PSCCH, within an active time, based on the first SL DRX configuration including information related to an SL DRX cycle and information related to an on-duration timer; and
receive, from the second device, second SCI or SL data, through the PSSCH,
wherein a start time point of the on-duration timer is configured based on a destination identifier, ID, related to the SL data.

17. A method for performing, by a second device, wireless communication, the method comprising:
transmitting, to a first device, first sidelink control information, SCI, for scheduling a physical sidelink shared channel, PSSCH, through a physical sidelink control channel, PSCCH; and
transmitting, to the first device, second SCI or SL data, through the PSSCH,
wherein the PSSCH is received within an active time of a first sidelink, SL, discontinuous reception, DRX, configuration by the first device,
wherein the first SL DRX configuration includes information related to an SL DRX cycle and information related to an on-duration timer, and
wherein a start time point of the on-duration timer is configured based on a destination identifier, ID, related to the SL data.

18. The method of claim 17, further comprising:
transmitting, to the first device, the first SL DRX configuration; and
transmitting, to the first device, information related to slot offset,
wherein a reference time point of the first SL DRX configuration is determined based on direct frame number, DFN, 0 related to the first device and the second device, and the slot offset.

19. A second device for performing wireless communication, the second device comprising:
one or more memories storing instructions;
one or more transceivers; and
one or more processors connected to the one or more memories and the one or more transceivers, wherein the one or more processors execute the instructions to:
transmit, to a first device, first sidelink control information, SCI, for scheduling a physical sidelink shared channel, PSSCH, through a physical sidelink control channel, PSCCH; and
transmit, to the first device, second SCI or SL data, through the PSSCH,
wherein the PSSCH is received within an active time of a first sidelink, SL, discontinuous reception, DRX, configuration by the first device,
wherein the first SL DRX configuration includes information related to an SL DRX cycle and information related to an on-duration timer, and
wherein a start time point of the on-duration timer is configured based on a destination identifier, ID, related to the SL data.

20. The second device of claim 19, wherein the one or more processors execute the instructions to:
transmit, to the first device, the first SL DRX configuration; and
transmit, to the first device, information related to slot offset,
wherein a reference time point of the first SL DRX configuration is determined based on direct frame number, DFN, 0 related to the first device and the second device, and the slot offset.
